# EUROPEAN PATENT APPLICATION

(11) **EP 4 836 209 A1**
(43) Date of publication of application: **04.11.2026**
(21) Application number: 25173200.4
(22) Date of filing: 29.04.2025
(51) Int. Cl.: H01S 3/02, H01S 3/07, H01S 3/04, H01S 3/223

(54) **FRAME FOR MOUNTING OPTICAL COMPONENTS OF AN OPTICAL AMPLIFIER, OPTICAL AMPLIFIER AND DRIVE LASER FOR A LITHOGRAPHY SYSTEM**

(71) Applicant: TRUMPF Lasersystems for Semiconductor Manufacturing SE, 71254 Ditzingen (DE); ASML Netherlands B.V., 5500 AH Veldhoven (NL)
(72) Inventor: Merten, Thomas, Ditzingen (DE); Gauder, Patrick, Ditzingen (DE); Fretschner, Michael, Ditzingen (DE); Fröhlich, Sascha, Ditzingen (DE); Schilling, Tom, Ditzingen (DE); Janssen, Toni Wil Mathijs, Veldhoven (NL)
(74) Representative: Kutzenberger Wolff & Partner

(57) **Abstract**

The present invention concerns a frame (200) for mounting optical components of an optical amplifier (2), characterized by a body (201) made of aluminium or of an aluminium alloy, wherein the body (201) includes at least one hollow profile segment (209, 210). The invention further concerns an optical amplifier (2) for amplifying laser radiation, comprising a frame (200) for mounting optical components as mentioned before. The invention also concerns a drive laser (100) for a lithography system (101), in particular for an extreme ultraviolet lithography system, comprising such an optical amplifier.

## Description

The invention concerns a frame for mounting optical components of an optical amplifier. The invention further concerns an optical amplifier for amplifying laser radiation. Furthermore, the invention concerns a drive laser for a lithography system, in particular an extreme ultraviolet lithography system.

The invention can be applied in the field of drive laser systems for use in extreme ultraviolet (EUV) lithography. Those drive laser systems typically include a laser source for generating pulsed laser radiation and one or more optical amplifiers for amplifying the pulsed laser radiation. Generally, the optical amplifiers include cavities that are filled with a laser gas, e.g., a mixture comprising CO₂, N₂ and He. The laser gas may be excited by radio-frequency (RF) signals applied to the laser gas using electrodes.

Components of such optical amplifiers, including cavities, mirrors, and devices for laser gas supply, are typically mounted to an optics frame that is implemented as a welded stainless-steel frame. Those welded stainless-steel frames suffer from a high time constant for reaching a thermally stable condition and a high sensitivity to thermally induced laser beam drift. Optical amplifiers comprising such steel frame structures struggle with laser beam fluctuation and oscillating laser beam stability which decreases the performance of the drive laser. Consequently, enormous efforts are required to control the temperature of the frame in terms of equipment and energy.

Against this background, the problem underlying the invention is to reduce the effort for reaching a thermally stable condition of an optical amplifier of a drive laser.

According to an aspect of the **invention** , a frame for mounting optical components of an optical amplifier is provided, comprising a body made of aluminium or of an aluminium alloy, wherein the body includes at least one hollow profile segment.

The inventive frame is manufactured of aluminium or of an aluminium alloy which has a higher thermal conductivity than stainless-steel. As a result, a thermally stable state may be reached faster than with a stainless-steel frame. The frame additionally comprises at least one, preferably several, hollow profile segments. Those hollow profile segments feature a reduced mass as compared with prior art stainless-steel frames. Consequently, with such a body comprising one or more hollow profile segments a thermally stable condition may be reached even faster and with less effort. The inventive frame enables putting the optical amplifier in a sleep mode in which it consumes less energy and thus releases less thermal energy. Because of the inventive frame's ability to reach the thermally stable condition faster than prior art amplifiers, the optical amplifier using the inventive frame can rapidly wake up and resume the thermally stable condition after being put to sleep mode.

According to a preferred embodiment of the invention, the body is a casted aluminium or aluminium alloy body. Using a casted body reduces the risk of failing joints between segments of prior art welded structures. Furthermore, manufacturing the body including the at least one hollow profile segment requires less material and less production costs than milling. The aluminium body may be casted in a mould with a sand core to obtain hollow structures of the body, e.g. said hollow profile segment.

According to a preferred embodiment of the invention, the body, preferably the at least one hollow profile segment, includes at least one cooling channel. The cooling channel may allow conducting a cooling medium, e.g. a cooling fluid or cooling gas. The use of a cooling medium may increase the amount of heat that is withdrawn from the body of the frame. Thus, the thermally stable state may be obtained even faster. The at least one cooling channel may be formed during casting of the aluminium body, e.g. by introducing a pipe, hose or tube into the mould. Alternatively, the at least one cooling channel may be obtained by milling. Preferably, the body comprises several cooling channels which allows to control separate regions of the body independently.

According to a preferred embodiment of the invention, a cross-section of the at least one hollow profile segment includes a rhombic hollow space. The rhombic hollow space allows to improve the transmission of heat from the material of the frame to the cooling medium in the at least one cooling channel. Preferably, the cross-section of the at least one hollow profile segment has a rectangular contour and the rhombic hollow space is arranged such that the hollow profile segment features less material at the centres of the edges of the rectangular contour than at the corners of the rectangular contour. Thereby, heat transmission in the hollow profile segment may be directed towards the corners of the rectangular contour. Preferably, the at least one cooling channel is arranged at a corner of the rectangular contour which leads to improved heat transmission from the body to the cooling medium. Alternatively, the cross-section of the at least one hollow profile segment has a rectangular contour and the rhombic hollow space is arranged such that the hollow profile segment features less material at the centres of first edges of the rectangular contour than at the centres of second edges of the rectangular contour, wherein the second edges are perpendicular to the first edges. Thereby, heat transmission in the hollow profile segment may be directed towards the second edges of the rectangular contour. Preferably, the at least one cooling channel is arranged at a second edge of the rectangular contour, particularly at the centre of a second edge, which leads to improved heat transmission from the body to the cooling medium.

According to a preferred embodiment of the invention, the cross-section of the at least one hollow profile segment includes at least two channel sections of a cooling channel. Preferably, the channel sections are arranged at the corners of the rectangular contour of the cross-section of the hollow profile section. Alternatively, the channel sections are arranged at the centre of opposite edges of the rectangular contour of the cross-section of the hollow profile section, preferably said second edges.

According to a preferred embodiment of the invention, the at least one cooling channel includes a stainless-steel pipe. The stainless-steel pipe is preferably arranged within the aluminium body. Such arrangement can be obtained by inserting the stainless-steel pipe in the mould before casting the aluminium body.

According to a preferred embodiment of the invention, the at least one cooling channel is configured for conducting a cooling medium according to a counterflow scheme, wherein the cooling channel includes an inlet, an outlet, and first and second channel sections that are running essentially in parallel so that the cooling medium, when flowing from the inlet to the outlet, flows in opposite directions in the first and second channel sections. As a result, a homogeneous heat transfer characteristic may be achieved which helps to reduce laser beam drift of the optical amplifier. The counterflow scheme arrangement leads to improved thermal stabilisation. A nearly constant heat transfer coefficient may be achieved which leads to a more predictable behaviour of the frame.

According to a preferred embodiment of the invention, the body includes an outer frame structure that has a rectangular layout. According to such embodiment, the outer frame structure includes outer segments that are arranged perpendicular to each other.

According to a preferred embodiment of the invention, the outer frame structure comprises several hollow profile segments. Preferably, the outer frame structure includes outer segments that are arranged perpendicular to each other, wherein all outer segments are hollow profile segments.

According to a preferred embodiment of the invention, the body includes an inner frame structure that is arranged concentrically within the outer frame structure and that has an octagonal layout. According to a particularly preferred embodiment, the inner frame structure includes inner segments that confine an angle of 135° to each other.

According to a preferred embodiment of the invention, the inner frame structure comprises several hollow profile segments. Preferably, the inner frame structure includes inner segments that confine an angle of 135° to each other, wherein all inner frame segments are hollow profile segments.

According to a preferred embodiment of the invention, at least one corner strut that is arranged between a corner of the outer frame structure and a corner of the inner frame structure. The at least one corner strut extends from a corner of the rectangular outer frame structure to a corner of the octagonal inner frame structure, thereby enhancing stiffness of the frame as a whole. Preferably, the frame comprises several corner struts extending from all corners of the outer frame structure. It is preferred that the at least one corner strut, preferably several corner struts, each comprise a hollow profile segment.

According to a preferred embodiment of the invention, at least one centre strut that is arranged between a centre of an edge of the outer frame structure and a corner of the inner frame structure. The at least one centre strut extends from a centre of the rectangular outer frame structure to a corner of the octagonal inner frame structure, thereby enhancing stiffness of the frame as a whole. Preferably, the frame comprises several centre struts extending from all edges of the outer frame structure. It is preferred that the at least one centre strut, preferably several centre struts, each comprise a hollow profile segment.

According to a preferred embodiment of the invention, the at least one hollow profile segment comprises a sensor that is arranged within a hollow space of the hollow profile segment. The sensor is preferably a temperature sensor. The sensor may be connected to a diagnostic unit and/or a control unit that controls flow of the cooling medium through one or more of the cooling channels.

According to a preferred embodiment of the invention, the body comprises a surface coating. The coating may comprise paint. The surface coating may increase thermal insulation thereby improving homogeneity of the temperature within the body. The surface coating may also influence emissivity which reduces the effects of heat radiation on the frame. Furthermore, the surface coating may improve cleanability of the frame.

According to a preferred embodiment of the invention, the body comprises a surface that is barrel-finished or shot-blasted or glass pearl blasted or corundum blasted. The surface treatment may influence emissivity which reduces the effects of heat radiation on the frame. Furthermore, the surface treatment may improve cleanability of the frame.

The frame preferably comprises several mounting areas for mounting the optical components. The mounting areas may comprise a flange and/or a recess for receiving the optical component or a respective holder for holding the optical component. The mounting areas may include holes, e.g. blind holes and/or through holes, for receiving a connection element, e.g. a screw and/or a bolt.

The frame preferably comprises several bearing areas for bearing the frame on a base. Preferably, the bearing areas are part of extensions of the body. The extensions may project from the outer frame structure of the body.

According to another aspect of the **invention**, an optical amplifier for amplifying laser radiation is provided, comprising a frame for mounting optical components as disclosed before.

According to another aspect of the **invention**, a drive laser for a lithography system, in particular for an extreme ultraviolet lithography system, is provided, comprising an optical amplifier as mentioned before.

The optical amplifier and the drive laser may each provide the same technical benefits and advantages as the inventive frame. Thus, reference is made to the respective description relating to the inventive frame.

Alternatively, or additionally, the advantageous embodiments and features disclosed in combination with the inventive frame can, alone or in combination, be applied to the inventive optical amplifier and/or drive laser.

Further details and advantages of the invention will be elucidated in the following using the embodiment shown in the figures.
- Fig. 1: depicts a block diagram of an embodiment of an extreme ultraviolet lithography system including a drive laser according to the invention;
- Fig. 2: depicts a frame according to an embodiment of the invention configured for use in the drive laser of the lithography system according to Fig. 1 in a perspective view;
- Fig. 3: depicts the frame of Fig. 2 in a sectional view;
- Fig. 4: depicts the frame of Fig. 2 in a perspective view, wherein the outer contour is shown transparent so that cooling channels and hollow spaces within the frame are visible.

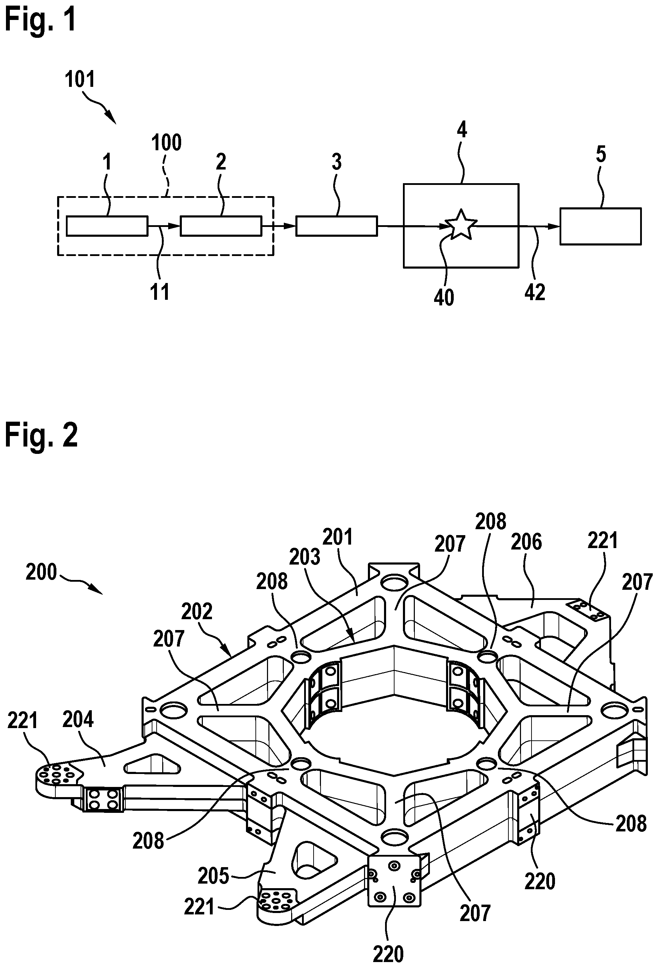

The embodiment in **Fig. 1** shows an extreme ultraviolet, EUV, lithography system 101 with a drive laser 100 that provides laser radiation to a focussing device 3, which focusses the laser radiation 11 onto a target area 40. A target material is arranged in the target area, which emits EUV radiation when irradiated with the laser radiation. According to the exemplary embodiment, the target area 40 is arranged in a target chamber 4 in which vacuum conditions prevail. The target material can be tin, for example, which is provided in drop form. The tin droplet can be heated by a pre-pulse, for example pulsed laser radiation 11 with a wavelength of 1 micron, so that the tin droplet is expanded, vaporised, ionised and/or a weak or possibly strong plasma is generated. A main pulse briefly following the pre-pulse, for example pulsed laser radiation 11 with a wavelength of 10.6 micron, can transfer the essential part of the material influenced by the pre-pulse into the plasma state, whereby the EUV radiation 42 is generated. This EUV radiation 42 is then fed to an exposure device 5 of the lithography system 10, in which the EUV radiation 42 can be used to expose semiconductor substrates.

According to the embodiment, the drive laser 100 comprises a radiation source 1 by means of which, in particular pulsed, laser radiation 11 can be generated. Even if only one radiation source 1 is shown here, two radiation sources 1 can be provided, for example to generate pre-pulses and main pulses of the laser radiation 11, which each follow one another in short succession and are focussed on a target area 40. The laser radiation generated by the radiation source 1 is amplified by an optical amplifier 2. The optical amplifier 2 includes one or more cavities filled with a laser active gas, e.g., comprising CO₂ and N₂ and He. The laser gas may be excited by radio-frequency (RF) signals applied to the laser gas using electrodes. Beam guiding devices may be provided as part of the optical amplifier 2 for guiding the laser radiation 11, e.g., from one cavity of the optical amplifier 2 to another.

**Fig. 2** depicts a frame 200 that may be used in the optical amplifier 2 according to Fig. 1 to mount optical components like cavities, beam guiding devices and devices for laser gas supply. The frame 200 comprises a body 201 made of aluminium or of an aluminium alloy and provides several mounting areas 220 for mounting the optical components. The mounting areas are provided with holes, e.g. blind holes and/or through holes, for receiving connection elements like screws and/or bolts. Some of the mounting areas 220 comprise a flange which may serve as a contact surface for the optical component that is mounted to the frame 200.

The body 201 of the frame 200 includes an outer frame structure 202 that has a rectangular layout and an inner frame structure 203 that is arranged concentrically within the outer frame structure 202 and that has an octagonal layout. The outer frame structure 202 and the inner frame structure 203 are connected by several struts 207, 208. Four corner struts 207 are arranged between each corner of the outer frame structure 202 and a respective corner of the inner frame structure 203. Additionally, four centre struts 208 are arranged between the centre of each edge of the outer, rectangular frame structure 202 and a respective corner of the inner, octagonal frame structure 203.

The body 201 of the embodiment shown in Fig. 2 comprises several, here three, extensions 204, 205, 206 which project from the outer rectangular contour of the outer frame structure 202. The extensions 204, 205, 206 include bearing areas 221 for bearing the frame on a base.

The body 201 is a casted aluminium or aluminium alloy body. That means that the outer frame structure 202, the inner frame structure 203, the struts 207, 208 and the extensions 204, 205, 206 are formed integrally as a single piece.

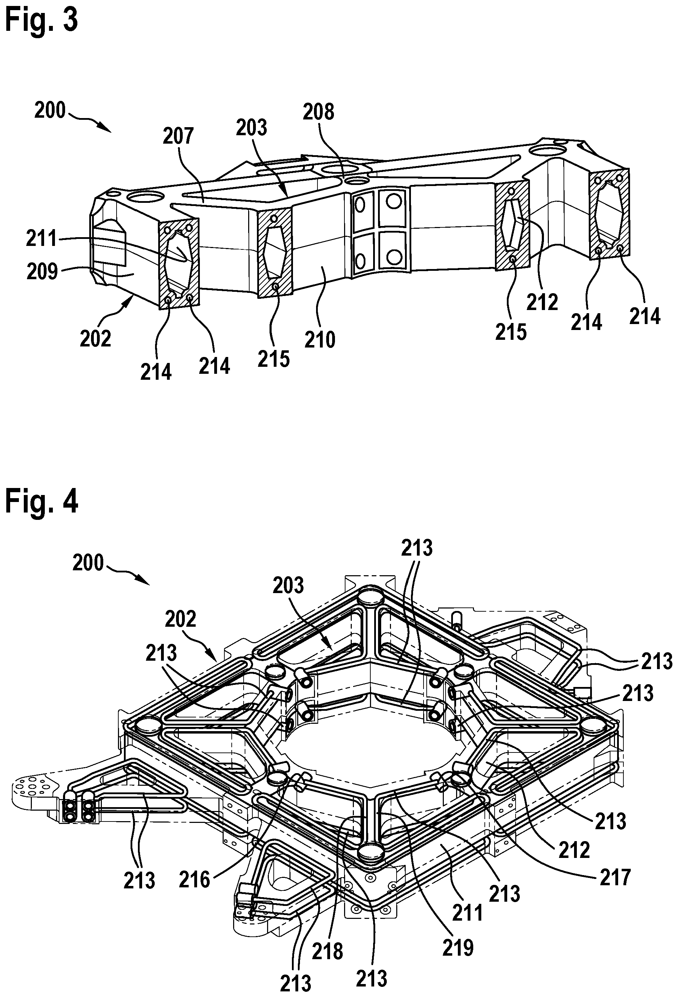

**Fig. 3** depicts the frame 200 of Fig. 2 in a sectional view along a plane that is parallel to one of the outer frame structure's 202 edges. From this sectional view it is apparent that the body 201 of the frame 200 includes several hollow profile segments 209, 210. The outer frame structure 202 comprises four hollow profile segments 209 and the inner frame structure 203 comprises eight hollow profile segments 210. The corner and centre struts are also implemented as hollow profile segments.

**Fig. 4** depicts a perspective view equivalent to the one of Fig. 2, wherein the outer contour of the body 201 is shown transparent so that the interior of the frame 200 is visible. As shown in Fig. 4, the hollow profile segments 209, 210 of the body 201 are connected such that hollow spaces 211, 212 included in those hollow profile segments are connected to form a common hollow space. Respectively, all the hollow profile segments 209, 210 of the body 201 are formed integrally as a single piece. Fig. 4 also shows that the body 201 includes several cooling channels 213 for conducting a cooling medium. The cooling channels 213 comprise stainless-steel pipes. During manufacture of the frame 200 the stainless-steel pipes are inserted into a mould before the body 201 is casted from aluminium or an aluminium alloy.

The cooling channels 213 are configured for conducting the cooling medium according to a counterflow scheme, wherein the respective cooling channel 213 includes an inlet 216, an outlet 217, and first and second channel sections 218, 219 that are running essentially in parallel so that the cooling medium, when flowing from the inlet 216 to the outlet 217, flows in opposite directions in the first and second channel sections 218, 219. The counterflow scheme is implemented for several cooling channels 213 of the body 201, preferably for all cooling channels 213.

Again, with reference to **Fig. 3****,** the cross-sections of both the outer frame structure 202 and the inner frame structure 203 will be discussed. The hollow frame segment 209 of the outer frame structure 202 has a cross-section that includes a rhombic hollow space. The hollow space 211 has a maximum width a vertical centre of the cross-section and tapers towards both the top and the bottom edge of the cross-section. Thus, there is less material at the vertical centre of the cross-section that at the top and bottom edges. Cooling channel segments 214 are arranged near the top and bottom edges of the cross-section. The hollow frame segment 210 of the inner frame structure 203 also has a cross-section that includes a rhombic hollow space. The hollow space 212 has a maximum width a vertical centre of the cross-section and tapers towards both the top and the bottom edge of the cross-section. Thus, there is less material at the vertical centre of the cross-section that at the top and bottom edges. Cooling channel segments 215 are arranged near the top and bottom edges of the cross-section. It is also apparent from Fig. 3, that the corner struts 207 feature a cross-section similar to that of the outer and inner frame structure. Also, the centre struts implement such hollow cross-section.

### Reference Signs:

- 1: laser radiation source
- 2: optical amplifier
- 3: focussing device
- 4: target chamber
- 5: exposure device
- 11: laser radiation
- 40: target area
- 42: EUV radiation

- 100: drive laser
- 101: EUV system

- 200: frame
- 201: body
- 202: outer frame structure
- 203: inner frame structure
- 204: extension
- 205: extension
- 206: extension
- 207: corner strut
- 208: centre strut
- 209: hollow profile segment (of outer frame structure)
- 210: hollow profile segment (of inner frame structure)
- 211: hollow space
- 212: hollow space
- 213: cooling channel
- 214: channel section
- 215: channel section
- 216: inlet
- 217: outlet
- 218: channel section
- 219: channel section
- 220: mounting area
- 221: bearing area

## Claims

1. Frame (200) for mounting optical components of an optical amplifier (2), **characterized by** a body (201) made of aluminium or of an aluminium alloy, wherein the body (201) includes at least one hollow profile segment (209, 210).

2. Frame (200) according to claim 1, **characterized in that** the body (201) is a casted aluminium or aluminium alloy body.

3. Frame (200) according to any of the preceding claims, **characterized in that** the body (201), preferably the at least one hollow profile segment (209, 210), includes at least one cooling channel (214, 215).

4. Frame (200) according to any of the preceding claims, **characterized in that** a cross-section of the at least one hollow profile segment (209, 210) includes a rhombic hollow space.

5. Frame (200) according to claim 4, **characterized in that** the cross-section of the at least one hollow profile segment (209, 210) includes at least two channel sections (214, 215) of a cooling channel (213).

6. Frame (200) according to any of claims 3 to 5, **characterized in that** the at least one cooling channel (213) includes a stainless-steel pipe.

7. Frame (200) according to any of claims 3 to 6, **characterized in that** the at least one cooling channel (213) is configured for conducting a cooling medium according to a counterflow scheme, wherein the cooling channel (213) includes an inlet (216), an outlet, and first and second channel sections (218, 219) that are running essentially in parallel so that the cooling medium, when flowing from the inlet (216) to the outlet (217), flows in opposite directions in the first and second channel sections (218, 219).

8. Frame (200) according to any of the of the preceding claims, **characterized in that** the body (201) includes an outer frame structure (202) that has a rectangular layout.

9. Frame (200) according to claim 8, **characterized in that** the outer frame structure (202) comprises several hollow profile segments (209).

10. Frame (200) according to any of claims 8 or 9, **characterized in that** the body (201) includes an inner frame structure (203) that is arranged concentrically within the outer frame structure (202) and that has an octagonal layout.

11. Frame (200) according to claim 10, **characterized in that** the inner frame structure (203) comprises several hollow profile segments (210).

12. Frame (200) according to any of claims 10 or 11, **characterized by** at least one corner strut (207) that is arranged between a corner of the outer frame structure (202) and a corner of the inner frame structure (203), wherein the at least one corner strut (207) preferably comprises a hollow profile segment.

13. Frame (200) according to any of claims 10 to 12, **characterized by** at least one centre strut (208) that is arranged between a centre of an edge of the outer frame structure (202) and a corner of the inner frame structure (203), wherein the at least one centre strut (208) preferably comprises a hollow profile segment.

14. Optical amplifier (2) for amplifying laser radiation, comprising a frame (200) for mounting optical components according to any of the preceding claims.

15. Drive laser (100) for a lithography system (101), in particular for an extreme ultraviolet lithography system, comprising an optical amplifier according to claim 14.
